# EUROPÄISCHE PATENTANMELDUNG

(11) **EP 1 243 468 A2**
(43) Veröffentlichungstag der Anmeldung: **25.09.2002**
(21) Anmeldenummer: 02005970.5
(22) Anmeldetag: 15.03.2002
(51) Int. Cl.: B60Q 1/115

(54) **Verfahren und Einrichtung zur Regelung der Leuchtweite eines Kraftfahrzeuges**

(30) Priorität: 21.03.2001 DE 10113730
(71) Anmelder: Hella KG Hueck & Co., 59552 Lippstadt (DE)
(72) Erfinder: Lütkewitte, Georg, 33129 Delbrück (DE); Hufnagel, Joachim, 58706 Menden (DE); Gebauer, Frank, 59558 Lippstadt (DE)

(57) **Zusammenfassung**

Verfahren zur Regelung der Leuchtweite eines Kraftfahrzeugs, bei dem von mindestens einer Stelleinheit die Leuchtweite eingestellt werden kann, wobei von einer Steuereinheit Sollpositionen der Leuchtweite entsprechende Steuerspannungen (U) ausgegeben werden können, die die mindestens eine Stelleinheit dazu veranlassen können, eine Istposition der Leuchtweite einer Sollposition anzunähern und wobei die mindestens eine Stelleinheit nur dann die Leuchtweite verändert, wenn die Steuerspannung (U) zu der der Istposition entsprechenden Steuerspannung (U₁) eine Differenz aufweist, die größer ist als eine vorgegebene Spannung, die einem Ruhefenster (RF) um die Istposition entspricht, wobei vor der Ausgabe einer einer Sollposition entsprechenden Steuerspannung (U₅), die zu der der Istposition - entsprechenden Steuerspannung (U₁) eine Differenz aufweist, die kleiner ist als die dem Ruhefenster (RF) entsprechende Spannung, von der Steuereinheit eine Steuerspannung (U₂, U₄) ausgegeben wird, die zu der der Istposition entsprechenden Steuerspannung (U₁) eine Differenz aufweist, die größer ist als die vorgegebene, dem Ruhefenster (RF) entsprechende Spannung, so dass die mindestens eine Stelleinheit mit der Verstellung der Leuchtweite beginnt.

## Beschreibung

Die vorliegende Erfindung betrifft ein Verfahren zur Regelung der Leuchtweite eines Kraftfahrzeugs, bei dem von mindestens einer Stelleinheit die Leuchtweite eingestellt werden kann, wobei von einer Steuereinheit Sollpositionen der Leuchtweite entsprechende Steuerspannungen ausgegeben werden können, die die mindestens eine Stelleinheit dazu veranlassen können, eine Istposition der Leuchtweite einer Sollposition anzunähern und wobei die mindestens eine Stelleinheit nur dann die Leuchtweite verändert, wenn die Steuerspannung zu der der Istposition entsprechenden Steuerspannung eine Differenz aufweist, die größer ist als eine vorgegebene Spannung, die einem Ruhefenster um die Istposition entspricht. Weiterhin betrifft die vorliegende Erfindung eine Einrichtung zur Regelung der Leuchtweite eines Kraftfahrzeugs, umfassend mindestens eine Stelleinheit, die die Leuchtweite einstellen kann, sowie eine Steuereinheit, die Sollpositionen der Leuchtweite entsprechende Steuerspannungen ausgegeben kann, die die mindestens eine Stelleinheit dazu veranlassen können, eine Istposition der Leuchtweite einer Sollposition anzunähern, wobei die mindestens eine Stelleinheit nur dann die Leuchtweite verändern kann, wenn die Steuerspannung zu der der Istposition entsprechenden Steuerspannung eine Differenz aufweist, die größer ist als eine vorgegebene Spannung, die einem Ruhefenster um die Istposition entspricht.

Ein Verfahren und eine Einrichtung der vorgenannten Art sind aus der europäischen Patentschrift EP 0 545 111 bekannt. Bei der darin beschriebenen Einrichtung ist an dem Reflektor eines jeden der beiden Scheinwerfer des Kraftfahrzeugs ein Elektromotor angebracht, der die Stellung des Reflektors verändern kann. Diese Elektromotoren werden jeweils von einer Stelleinheit angesteuert. Weiterhin umfasst die darin beschriebene Einrichtung eine Steuereinheit, die eine einem Sollwert entsprechende Spannung ausgeben kann. Eine Sollwertvorgabe kann dabei beispielsweise durch ein an dem Armaturenbrett des Kraftfahrzeugs angeordnetes Einstellmittel erfolgen. Das Verfahren zur Regelung der Leuchtweite des Kraftfahrzeugs gemäß der vorgenannten Schrift sieht vor, dass eine Verstellung der Leuchtweite durch die Stelleinheiten erst dann erfolgt, wenn die der Sollposition entsprechende Spannung außerhalb des Ruhefenster der der Istposition entsprechenden Spannung liegt. Ein derartiges Ruhefenster ist sinnvoll, weil in der Regel nicht gewährleistet werden kann, dass durch Betätigen der Elektromotoren durch die Stelleinheiten die Istposition exakt mit der Sollposition in Übereinstimmung gebracht werden kann. Vielmehr wird bei einem nicht vorhandenen Toleranzfenster um die Sollposition ein Schwingen, d.h. ein ständiges Vor- und Zurücklaufen der Elektromotoren auftreten. Dies ist für den Benutzer des Kraftfahrzeugs äußerst irritierend. Bei dem Verfahren der vorgenannten Art ist ein weiteres kleineres Positionierfenster vorgesehen, das einer Hysteresefunktion der Steuereinheit Rechnung trägt. Diese Hysteresefunktion wird dadurch bewirkt, dass die Elektromotoren nach Abschalten der Stellspannung nicht unmittelbar stehen bleiben, sondern über diese Stellung etwas hinauslaufen.

Als nachteilig bei einer Einrichtung und einem Verfahren der vorgenannten Art erweist es sich, dass bei von der Istposition abweichender Sollposition in Größenordnungen zwischen der Breite des größeren Ruhefensters und der Breite des kleineren Positionierfensters keine Verstellung erfolgt, so dass unter Umständen die Leuchtweite des Kraftfahrzeuges nicht exakt eingestellt ist. Eine derartige Verstellung kann beispielsweise dann notwendig sein, wenn das Kraftfahrzeug beispielsweise aufgrund einer Bergauf- oder Bergabfahrt eine Schieflage aufweist, die beispielsweise von mit der Steuereinheit verbundenen Achssensoren erfasst und an die Steuereinheit zur Verarbeitung weitergegeben werden kann.

Das der vorliegenden Erfindung zugrundeliegende Problem ist die Schaffung eines Verfahrens und einer Einrichtung der eingangs genannten Art, die eine exaktere Regelung der Leuchtweite des Kraftfahrzeugs ermöglichen.

Dies wird hinsichtlich des Verfahrens durch die Merkmale des kennzeichnenden Teils des Anspruchs 1 und hinsichtlich der Einrichtung durch die kennzeichnenden Merkmale des Anspruchs 11 erreicht.

Hinsichtlich des Verfahrens ist erfindungsgemäß vorgesehen, dass vor der Ausgabe einer einer Sollposition entsprechenden Steuerspannung, die zu der der Istposition entsprechenden Steuerspannung eine Differenz aufweist, die kleiner ist als die dem Ruhefenster entsprechende Spannung, von der Steuereinheit eine Steuerspannung ausgegeben wird, die zu der der Istposition entsprechenden Steuerspannung eine Differenz aufweist, die größer ist als die vorgegebene, dem Ruhefenster entsprechende Spannung, so dass die mindestens eine Stelleinheit mit der Verstellung der Leuchtweite beginnt. Durch die Ausgabe einer Steuerspannung, die zu der Istspannung eine Differenz größer als die dem Ruhefenster entsprechende vorgegebene Spannung aufweist, wird beispielsweise in den Stelleinheiten oder aber auch in der Steuereinheit das Ruhefenster ausgeschaltet. Beispielsweise kann anstelle des Ruhefensters ein kleineres Positionierfenster eingeschaltet werden, das bei Eintritt der der Istposition entsprechenden Spannung in das um die der Sollposition entsprechende Steuerspannung angeordnete Positionierfenster der Verstellvorgang abbricht. Gegebenenfalls kann die Einrichtung derart gestaltet sein, dass die Elektromotoren noch ein Stück nachlaufen, so dass unter Umständen die exakte Sollposition erreicht wird. Durch das erfindungsgemäße Verfahren wird die Möglichkeit bereit gestellt, eine Sollposition anzufahren, die sich innerhalb des Ruhefensters um die aktuelle Istposition befindet.

Gemäß einer bevorzugten Ausführungsform der vorliegenden Erfindung ist die vor der Ausgabe der der Sollposition entsprechenden Steuerspannung ausgegebene Steuerspannung als kurzzeitiger Spannungspuls ausgeführt. Durch die Ausgabe eines derartigen Spannungspulses wird letztlich nur das entsprechende Ruhefenster ausgeschaltet, ohne dass gleichzeitig eine Ansteuerung der Elektromotoren durch die Stelleinheiten erfolgt.

Hierbei besteht die Möglichkeit, dass direkt vor Ausgabe der der Sollposition entsprechenden Steuerspannung ein Spannungspuls ausgegeben wird, der zu der direkt davor ausgegebenen Steuerspannung eine Differenz aufweist, die größer ist als die vorgegebene dem Ruhefenster entsprechende Spannung. Mit einem derartigen Verfahren wird auf einfache Weise eine Regelung der Leuchtweite innerhalb des Ruhefensters realisiert. Es kann ausgehend von der der ursprünglichen Istposition entsprechenden Steuerspannung vor dem Ausgeben der der Sollposition entsprechenden Steuerspannung lediglich ein einzelner Spannungspuls ausgegeben werden, der das Ruhefenster ausschaltet, so dass eine Verstellung der Leuchtweite in Richtung auf die Sollposition erfolgen kann.

Alternativ oder zusätzlich dazu kann nach Ausgabe eines ersten Spannungspulses eine Steuerspannung ausgegeben werden, die verschieden von der der Istposition entsprechenden Steuerspannung und der der Sollposition entsprechenden Steuerspannung ist. Diese nach dem ersten Spannungspuls ausgegebene Steuerspannung kann gemäß einer bevorzugten Ausführungsform der vorliegenden Erfindung größer als die der Istposition entsprechenden Steuerspannung sein, wenn die der Sollposition entsprechende Steuerspannung kleiner als die der Istposition entsprechende Steuerspannung ist, und weiterhin kann die nach dem Spannungspuls ausgegebene Steuerspannung kleiner als die der Istposition entsprechende Steuerspannung sein, wenn die der Sollposition entsprechende Steuerspannung größer als die der Istposition entsprechende Steuerspannung ist. Mit einem derartigen Verfahren wird eine Regelung der Leuchtweite in einem Bereich ermöglicht, der in der Regel bei Einrichtungen und Verfahren zur Regelung der Leuchtweite nicht erreichbar ist. Es zeigt sich nämlich, dass in der Regel derartige Einrichtungen bzw. Verfahren Kurzschlusserkennungsroutinen aufweisen, die eine Einschränkung des Arbeitsbereiches auf beispielsweise 10 bis 90 % der Batteriespannung oder 15 bis 85 % der Batteriespannung des Kraftfahrzeuges bewirken. In einem Steuerspannungsbereich oberhalb oder unterhalb der vorgenannten Kurzschlusserkennungsgrenzen wird von den Stelleinheiten und/oder von der Steuereinheit angenommen, dass ein Kurzschluss vorliegt. In diesem Fall wird von den Stelleinheiten keine Verstellung der Leuchtweite vorgenommen. Für den Fall, dass die aktuelle Istposition einer Steuerspannung entspricht, die sehr nahe an der Kurzschlusserkennungsgrenze liegt, können von der Steuereinheit kein Spannungspuls oder keine Steuerspannung ausgegeben werden, die in Richtung auf die benachbarte Kurzschlusserkennungsgrenze gerichtet sind und diese überschreiten. Da aber zur Durchführung des erfindungsgemäßen Verfahrens eine außerhalb des Ruhefensters liegende Steuerspannung zur Abschaltung des Ruhefensters ausgegeben werden muss, wird ein erster Spannungspuls ausgegeben, der einer Steuerspannung entspricht, die weiter von der Kurzschlusserkennungsgrenze entfernt ist, als die der Istposition entsprechende Steuerspannung. Durch diesen Spannungspuls wird das Ruhefenster abgeschaltet. Daran anschließend wird eine Steuerspannung ausgegeben, die ebenfalls weiter von der Kurzschlusserkennungsgrenze entfernt ist als die der ursprünglichen Istposition entsprechende Steuerspannung. Nach einer Verstellung der Istposition entsprechend der nach dem ersten Spannungspuls ausgegebenen Steuerspannung werden die Ruhefenster um diese neue Steuerspannung aufgebaut. Daran anschließend kann vermittels zweier alternativer Methoden die Sollposition angefahren werden.

Zum einen besteht die Möglichkeit, dass die nach dem ersten Spannungspuls ausgegebene Steuerspannung zu der der Sollposition entsprechenden Steuerspannung eine Differenz aufweist, die größer ist als die vorgegebene, dem Ruhefenster entsprechende Spannung. In diesem Fall kann direkt anschließend an die nach dem ersten Spannungspuls ausgegebene Steuerspannung die der Sollposition entsprechende Steuerspannung ausgegeben werden, weil die Ausgabe der der Sollposition entsprechenden Steuerspannung die neuerlich aufgebauten Ruhefenster ausschalten kann und somit eine direkte Verstellung der Leuchtweite durch die Stelleinheiten bewirken kann.

Alternativ dazu können zwei Spannungspulse ausgegeben werden, zwischen denen die sowohl von der der Sollposition entsprechenden Steuerspannung als auch der von der der Istposition entsprechenden Steuerspannung verschiedene Steuerspannung ausgegeben wird. Hierbei sollte die der Differenz zwischen der zwischen den Spannungspulsen ausgegebenen Steuerspannung und dem nach dieser ausgegebenen Spannungspuls größer sein als die vorgegebene, dem Ruhefenster entsprechende Spannung. Damit wird durch den zweiten Spannungspuls das Ruhefenster ausgeschaltet, so dass direkt anschließend an den zweiten Spannungspuls die der Sollposition entsprechende Steuerspannung ausgegeben werden kann.

Die beiden alternativen Verfahren stellen eine relativ einfach realisierbare aber äußerst wirkungsvolle Methode dar, im Bereich der Kurzschlusserkennungsgrenzen Sollpositionen anzufahren, die sich in dem Ruhefenster der ursprünglichen Istpositionen befinden. Damit wird eine erhöhte Stellgenauigkeit der Leuchtweite über den gesamten Arbeitsbereich der Einrichtung zur Verstellung der Leuchtweite realisiert.

Die Sollposition kann von der Steuereinheit aufgrund von Signalen von Achssensoren, die eine Schieflage des Kraftfahrzeugs erfassen können, und/oder aufgrund eines von dem Benutzer bedienbaren Einstellmittels, das beispielsweise in dem Armaturenbrett angeordnet ist, ermittelt werden.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen
- Fig. 1a: ein Spannungs-Zeit-Diagramm sowie ein Weg-Zeit-Diagramm, aus denen die Abfolge einzelner Verfahrensschritte eines erfindungsgemäßen Verfahrens ersichtlich ist;
- Fig. 1b: ein Spannungs-Zeit-Diagramm sowie ein Weg-Zeit-Diagramm, aus denen die Abfolge einzelner Verfahrensschritte eines weiteren erfindungsgemäßen Verfahrens ersichtlich ist;
- Fig. 2a: ein Spannungs-Zeit-Diagramm sowie ein Weg-Zeit-Diagramm, aus denen die Abfolge einzelner Verfahrensschritte eines weiteren erfindungsgemäßen Verfahrens ersichtlich ist;
- Fig. 2b: ein Spannungs-Zeit-Diagramm sowie ein Weg-Zeit-Diagramm, aus denen die Abfolge einzelner Verfahrensschritte eines weiteren erfindungsgemäßen Verfahrens ersichtlich ist;
- Fig. 3a: ein Spannungs-Zeit-Diagramm sowie ein Weg-Zeit-Diagramm, aus denen die Abfolge einzelner Verfahrensschritte eines weiteren erfindungsgemäßen Verfahrens ersichtlich ist;
- Fig. 3b: ein Spannungs-Zeit-Diagramm sowie ein Weg-Zeit-Diagramm, aus denen die Abfolge einzelner Verfahrensschritte eines weiteren erfindungsgemäßen Verfahrens ersichtlich ist.

Eine erfindungsgemäße Einrichtung zur Durchführung des erfindungsgemäßen Verfahrens kann eine Steuereinheit umfassen, die eine Steuerspannung ausgeben kann, die im Bereich der Scheinwerfer des Kraftfahrzeuges angeordnete und mit den Scheinwerfern verbundene Stelleinheiten zur Verstellung der Leuchtweite des Kraftfahrzeuges ansteuern kann. Die Steuereinheit kann beispielsweise mit einem Mikroprozessor versehen sein, der entsprechend Signalen von an der Vorder- und/oder Hinterachse angeordneten Achssensoren eine Steuerspannung ausrechnen kann, die die Neigung des Fahrzeuges berücksichtigt. Diese Steuerspannung gibt einen Sollwert vor. Dieser Sollwert wird mit dem an den Stelleinheiten vorliegendem Istwert verglichen, wobei anhand des im nachfolgenden noch näher beschriebenen erfindungsgemäßen Verfahrens eine Anpassung des Istwertes an den Sollwert erfolgen kann.

Die Steuerspannung kann Werte in einem Arbeitsbereich einnehmen, der beispielsweise zwischen 15 % und 85 % der Batteriespannung U_{B} betragen kann. Wenn an den Stelleinheiten eine Steuerspannung anliegt, die in dem Bereich zwischen 0 V und 15 % der Batteriespannung bzw. in dem Bereich zwischen 85 % und 100 % der Batteriespannung liegt, wird von den Stelleinheiten entschieden, dass ein Kurzschluss vorliegt, da in der Regel bei derartigen hohen oder niedrigen Spannungen ein Kurzschluss beispielsweise der sich zwischen der Steuereinheit und den Stelleinheiten erstreckenden Steuerleitungen auf Masse oder auf die Batteriespannung vorliegt. Bei Erkennung eines Kurzschlusses ändern die Stelleinheiten die Leuchtweite des Kraftfahrzeuges nicht.

Eine jede der Stelleinheiten kann beispielsweise einen Elektromotor mit einer entsprechenden Stellspannung ansteuern, wobei dieser Elektromotor den Reflektor des entsprechenden Scheinwerfers derart bewegen kann, dass die Leuchtweite entsprechend den Vorgaben der Stelleinheit eingestellt wird.

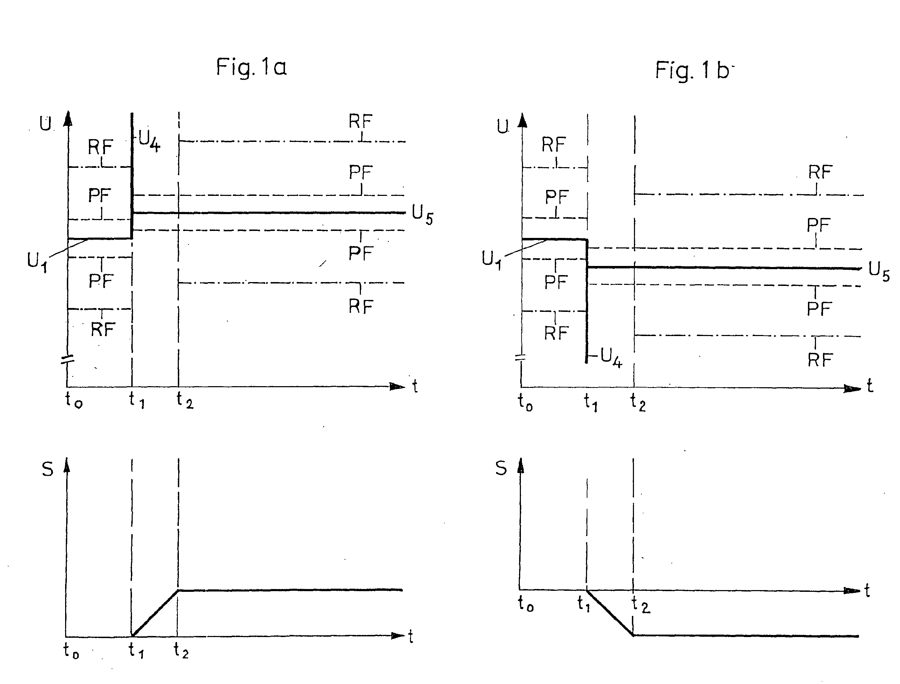

Die Diagramme gemäß Fig. 1a und Fig. 1b geben einzelne Verfahrensschritte eines erfindungsgemäßen Verfahrens in einem Bereich wieder, in dem die Istposition etwa zwischen 20 % und 70 % der Batteriespannung U_{B} beträgt. In den Abbildungen sind jeweils oben die Steuerspannung U gegen die Zeit t und jeweils unten der Verstellweg S der mit den Stelleinheiten verbundenen Elektromotoren gegen die Zeit t aufgetragen. In den Abbildungen wird jeweils davon ausgegangen, dass zum Zeitpunkt t₀ und in dem Zeitraum zwischen t₀ und t₁ die Steuerspannung U₁ der Istposition entspricht. Aus Fig. 1a sind zwei Spannungsfenster entnehmbar, nämlich ein engeres Positionierfenster PF und ein weiteres Ruhefenster RF. Das Positionierfenster PF ist durch gestrichelte Linien angedeutet, wohingegen das Ruhefenster RF durch strichpunktierte Linien angedeutet ist. Für den Fall, dass von dem Steuergerät eine Sollspannung ausgegeben wird, die von dem Istwert U₁ nicht weiter nach oben oder nach unten abweicht als das Ruhefenster RF, wird keine Bewegung der Stelleinheiten erfolgen. Erst wenn die Sollposition der Steuerspannung außerhalb des Ruhefensters RF liegt, werden die Stelleinheiten die Istposition auf die Sollposition zubewegen. Wenn die Differenz der der Istposition entsprechenden Spannung und der der Sollposition entsprechenden Steuerspannung kleiner sind als die halbe Breite des Positionierfensters, beenden die Stelleinheiten ihre Verstelltätigkeit, wobei dann gegebenenfalls der Elektromotor noch ein Stück weit ausläuft und idealerweise die Istposition am Ende dieser Bewegung des Elektromotors der Sollposition entspricht.

Bei dem in Fig. 1a verdeutlichten erfindungsgemäßen Verfahren soll eine Sollposition angefahren werden, die nur wenig oberhalb der Istposition der Steuerspannung U₁ liegt. Die in Fig. 1a abgebildete Sollposition U₅ befindet sich in dem Ruhefenster RF der Istposition der Steuerspannung U₁. Um die Stelleinheiten zu einer Ansteuerung der Elektromotoren zu veranlassen, muss somit zuerst eine Steuerspannung erzeugt werden, die die Grenzen des Ruhefensters RF übersteigt. Dies wird durch einen kurzen Spannungspuls U₄ erreicht, der in Fig. 1a nach oben zu positiven Spannungen hin gerichtet ist. Dieser das Ruhefenster RF übersteigende Spannungspuls U₄ bewirkt in den Stelleinheiten eine Umschaltung von einer Sensitivität auf das Ruhefenster RF auf eine Sensitivität auf das Positionierfenster PF. In Fig. 1a ist dies dadurch angedeutet, dass in dem Zeitintervall zwischen t₁ und t₂ nur ein Positionierfenster PF und kein Ruhefenster RF aktiviert ist. Anschließend an den Spannungspuls U₄ wird die vorgenannte Steuerspannung U₅ angelegt, die einer leicht erhöhten Sollposition entspricht. Dem unteren Teil von Fig. 1a ist die ab dem Zeitpunkt t₁ erfolgende Verstellung der Elektromotoren durch die Stelleinheiten entnehmbar. Das Diagramm soll verdeutlichen, dass ab dem Zeitpunkt t₂ die Istposition der Stellspannung an den Stelleinheiten in das Positionierfenster PF der Steuerspannung U₅ eintritt, die der neuen Sollposition entspricht. Daraufhin beenden die Stelleinheiten ihre Ansteuerung der Elektromotoren. Die vorgenannte gegebenenfalls gewünschte Weiterbewegung der Elektromotoren in Richtung auf die gewünschte Sollposition ist in diesem Diagramm nicht wiedergegeben.

Fig. 1b schildert sehr ähnliche Verfahrensschritte, bei denen lediglich die der neuen Sollposition entsprechende Steuerspannung U₅ etwas niedriger ist als die der ursprünglichen Istposition entsprechenden Steuerspannung U₁.

Dementsprechend wird in diesem Fall auch der Spannungspuls U₄ einem kurzzeitigem Spannungsabfall entsprechen, so dass er in Fig. 1b nach unten eingezeichnet ist.

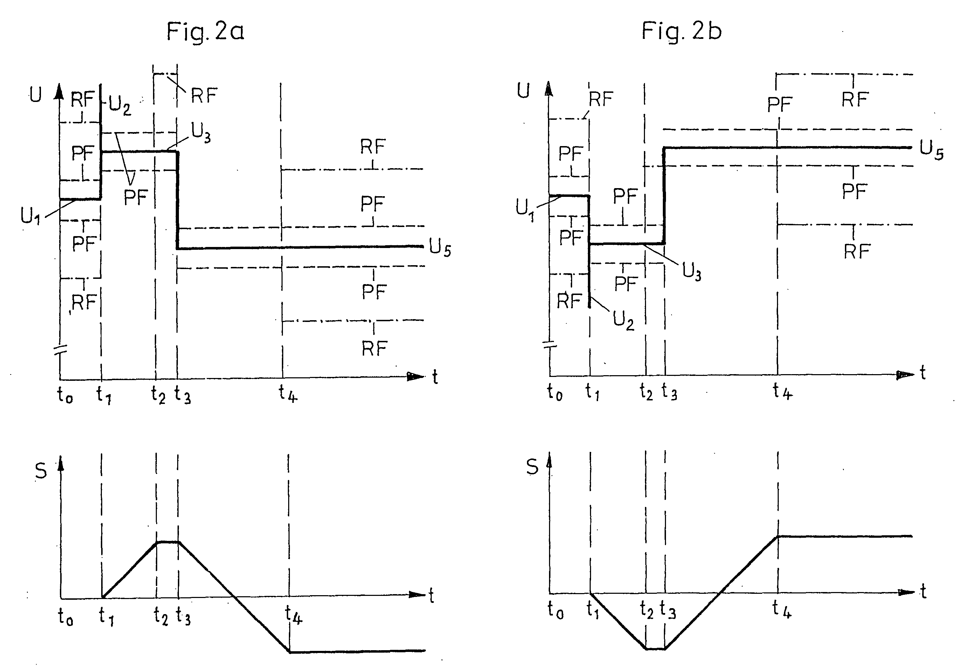

Fig. 2a verdeutlicht Verfahrensschritte eines erfindungsgemäßen Verfahrens, bei dem die der Istposition entsprechende Steuerspannung U₁ an der unteren Grenze des Arbeitsbereiches angesiedelt ist, beispielsweise nahe bei 15 % der Batteriespannung U_{B}. Wenn in diesem Bereich mit dem im Zusammenhang mit Fig. 1 beschriebenen Verfahren eine Sollposition angefahren werden soll, die einer etwas niedrigeren Steuerspannung entspricht, müsste ein weit in Fig. 2a nach unten gerichteter Spannungspuls verwendet werden, der dabei in einem Spannungsbereich befindlich wäre, der dem vorgenannten Kurzschlusserkennungsbereich der Stelleinheiten bzw. der Steuereinheiten entspräche. Daher kann in diesem Bereich nahe den Kurzschlusserkennungsgrenzen das in Fig. 1 verdeutliche Verfahren nicht angewandt werden. Vielmehr muss, wie dies Fig. 2a entnehmbar ist, zuerst ein Spannungspuls U₂ zu größeren Spannungen hin erfolgen. Anschließend an diesen Spannungspuls U₂ wird eine Steuerspannung U₃ von der Steuereinheit ausgegeben, die geringfügig größer als die der ursprünglichen Istposition entsprechende Steuerspannung U₁ ist. Dem unteren Teil der Fig. 2a ist entnehmbar, dass den Stelleinheiten bis zu dem Zeitpunkt t₂ bzw. t₃ Zeit gegeben wird, die Elektromotoren derart anzusteuern, dass die Istposition der einer Sollposition entsprechenden Steuerspannung U₃ angeglichen wird.

Zum Zeitpunkt t₃ wird die Steuerspannung auf den Wert U₅ abgesenkt, der der eigentlichen angestrebten Sollposition entspricht, wobei diese Sollposition, wie bereits erläutert, eine etwas kleinere Spannung als die der ursprünglichen Istposition entsprechende Steuerspannung U₁ aufweist. Aufgrund der Tatsache, dass die Differenz zwischen den Steuerspannungen U₃ und U₅ größer als das um die Steuerspannung U₃ gebildete Ruhefenster RF ist, werden durch die Änderung der Steuerspannung auf den Wert U₅ an den Stelleinheiten die Ruhefenster RF auf die Positionierfenster PF umgeschaltet. Dementsprechend beginnt ab dem Zeitpunkt t₃ die Verstellung der Elektromotoren in die entgegengesetzte Richtung bis zum Zeitpunkt t₄, in dem die Istposition in das Positionierfenster PF der durch die Steuerspannung U₅ gegebenen Sollpositionen eintritt. Wiederum ist ein gegebenenfalls vorhandenes Auslaufen der Elektromotoren nicht abgebildet. In Fig. 2a ist ab dem Zeitpunkt t₄ wiederum angedeutet, dass nach Erreichen der Sollposition in den Stelleinheiten wieder eine Einschaltung der Ruhefenster RF vorgenommen wird.

In Fig. 2b ist die analoge Situation in einem Bereich nahe an der oberen Grenze des Arbeitsbereiches abgebildet. Hierbei kann die der Istposition entsprechende Steuerspannung U₁ beispielsweise etwa 84 % bis 85 % der Batteriespannung U_{B} betragen.

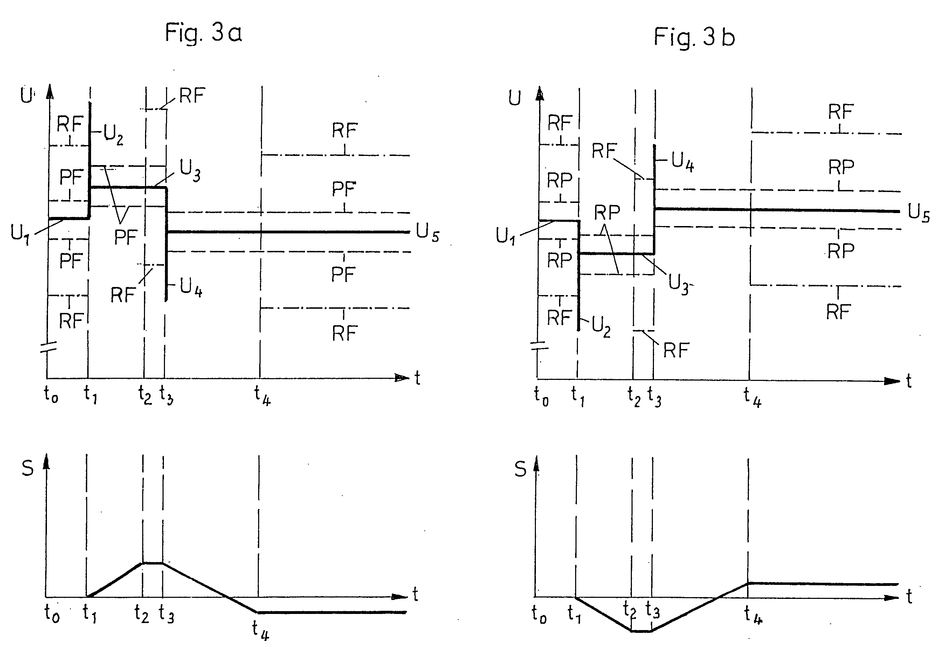

Die Fig. 3a und 3b entsprechen im wesentlichen den Fig. 2a und 2b dahingehend, dass ebenfalls nahe der Kurzschlusserkennungsgrenzen gearbeitet wird. Unterschiedlich zu Fig. 2 ist zum einen, dass eine Zielposition angefahren werden soll, deren entsprechende Steuerspannung U₅ kaum verschieden von der zum Zeitpunkt t₀ gegebenen, einer Istposition entsprechenden Steuerspannung U₁ ist. Der Unterschied zwischen U₁ und U₅ ist kleiner als die halbe Breite eines Positionierfensters PF. Aus Fig. 3a ist ersichtlich, dass das in diesem Fall gewählte Verfahren bis zum Zeitpunkt t₃ dem Verfahren gemäß Fig. 2a entspricht. Im Zeitpunkt t₃ wird der Steuerspannung ein Spannungspuls U₄ überlagert, der zu kleineren Spannungswerten hin gerichtet ist und aus dem Ruhefenster RF herausragt. Durch diesen Spannungspuls U₄ wird in den Stelleinheiten eine Umschaltung von den Ruhefenstern RF auf die Positionierfenster PF vorgenommen. Daran anschließend wird eine Steuerspannung U₅ ausgegeben, die der Zielposition bzw. Sollposition entspricht. Dem unteren Teil von Fig. 3a ist entnehmbar, dass entsprechend ab dem Zeitpunkt t₃ eine Verstellung der Elektromotoren zu dieser Zielposition hin erfolgt, die im Zeitpunkt t₄ erreicht wird.

Fig. 3b zeigt ein analoges Verfahren in der Nachbarschaft zu den oberen Kurzschlusserkennungsgrenzen.

## Patentansprüche

1. Verfahren zur Regelung der Leuchtweite eines Kraftfahrzeugs, bei dem von mindestens einer Stelleinheit die Leuchtweite eingestellt werden kann, wobei von einer Steuereinheit Sollpositionen der Leuchtweite entsprechende Steuerspannungen (U) ausgegeben werden können, die die mindestens eine Stelleinheit dazu veranlassen können, eine Istposition der Leuchtweite einer Sollposition anzunähern und wobei die mindestens eine Stelleinheit nur dann die Leuchtweite verändert, wenn die Steuerspannung (U) zu der der Istposition entsprechenden Steuerspannung (U₁) eine Differenz aufweist, die größer ist als eine vorgegebene Spannung, die einem Ruhefenster (RF) um die Istposition entspricht, **dadurch gekennzeichnet, dass** vor der Ausgabe einer einer Sollposition entsprechenden Steuerspannung (U₅), die zu der der Istposition entsprechenden Steuerspannung (U₁) eine Differenz aufweist, die kleiner ist als die dem Ruhefenster (RF) entsprechende Spannung, von der Steuereinheit eine Steuerspannung (U₂, U₄) ausgegeben wird, die zu der der Istposition entsprechenden Steuerspannung (U₁) eine Differenz aufweist, die größer ist als die vorgegebene, dem Ruhefenster (RF) entsprechende Spannung, so dass die mindestens eine Stelleinheit mit der Verstellung der Leuchtweite beginnt.

2. Verfahren nach Anspruch 1, **dadurch gekennzeichnet, dass** die vor der Ausgabe der der Sollposition entsprechenden Steuerspannung (U₅) ausgegebene Steuerspannung (U₂, U₄) als kurzzeitiger Spannungspuls ausgeführt ist.

3. Verfahren nach Anspruch 2, **dadurch gekennzeichnet, dass** direkt vor Ausgabe der der Sollposition entsprechenden Steuerspannung (U₅) ein Spannungspuls (U₄) ausgegeben wird, der zu der direkt davor ausgegebenen Steuerspannung (U₁, U₃) eine Differenz aufweist, die größer ist als die vorgegebene, dem Ruhefenster (RF) entsprechende Spannung.

4. Verfahren nach einem der Ansprüche 2 oder 3, **dadurch gekennzeichnet, dass** nach Ausgabe eines ersten Spannungspulses (U₂) eine Steuerspannung (U₃) ausgegeben wird, die verschieden von der der Istposition entsprechenden Steuerspannung (U₁) und der der Sollposition entsprechenden Steuerspannung (U₅) ist.

5. Verfahren nach Anspruch 4, **dadurch gekennzeichnet, dass** die nach dem ersten Spannungspuls (U₂) ausgegebene Steuerspannung (U₃) größer als die der Istposition entsprechenden Steuerspannung (U₁) ist, wenn die der Sollposition entsprechende Steuerspannung (U₅) kleiner als die der Istposition entsprechende Steuerspannung (U₁) ist, wobei die nach dem Spannungspuls (U₂) ausgegebene Steuerspannung (U₃) kleiner als die der Istposition entsprechende Steuerspannung (U₁) ist, wenn die der Sollposition entsprechende Steuerspannung (U₅) größer als die der Istposition entsprechende Steuerspannung (U₁) ist.

6. Verfahren nach Anspruch 5, **dadurch gekennzeichnet, dass** die nach dem ersten Spannungspuls (U₂) ausgegebene Steuerspannung (U₃) zur der der Sollposition entsprechenden Steuerspannung (U₅) eine Differenz aufweist, die größer ist als die vorgegebene, dem Ruhefenster (RF) entsprechende Spannung.

7. Verfahren nach Anspruch 6, **dadurch gekennzeichnet, dass** anschließend an die nach dem ersten Spannungspuls (U₂) ausgegeben Steuerspannung (U₃) die der Sollposition entsprechende Steuerspannung (U₅) ausgegeben wird.

8. Verfahren nach einem der Ansprüche 2 bis 6, **dadurch gekennzeichnet, dass** zwei Spannungspulse (U₂, U₄) ausgegeben werden, zwischen denen die sowohl von der der Sollposition entsprechenden Steuerspannung (U₅) als auch der von der der Istposition entsprechenden Steuerspannung (U₁) verschiedene Steuerspannung (U₃) ausgegeben wird.

9. Verfahren nach Anspruch 8, **dadurch gekennzeichnet, dass** die Differenz zwischen der zwischen den Spannungspulsen (U₂, U₄) ausgegeben Steuerspannung (U₃) und dem nach dieser ausgegebenen Spannungspuls (U₄) größer ist als die vorgegebene, dem Ruhefenster (RF) entsprechende Spannung.

10. Verfahren nach einem der Ansprüche 8 oder 9, **dadurch gekennzeichnet, dass** anschließend an den zweiten Spannungspuls (U₄) die der Sollposition entsprechende Steuerspannung (U₅) ausgegeben wird.

11. Einrichtung zur Regelung der Leuchtweite eines Kraftfahrzeugs, umfassend mindestens eine Stelleinheit, die die Leuchtweite einstellen kann, sowie eine Steuereinheit, die Sollpositionen der Leuchtweite entsprechende Steuerspannungen (U) ausgegeben kann, die die mindestens eine Stelleinheit dazu veranlassen können, eine Istposition der Leuchtweite einer Sollposition anzunähern, wobei die mindestens eine Stelleinheit nur dann die Leuchtweite verändern kann, wenn die Steuerspannung (U) zu der der Istposition entsprechenden Steuerspannung (U₁) eine Differenz aufweist, die größer ist als eine vorgegebene Spannung, die einem Ruhefenster (RF) um die Istposition entspricht, **dadurch gekennzeichnet, dass** die Einrichtung derart ausgeführt ist, dass sie das Verfahren nach einem der Ansprüche 1 bis 10 durchführen kann.
